# EUROPEAN PATENT SPECIFICATION

(11) **EP 2 051 223 B1**
(45) Date of publication and mention of the grant of the patent: **20.01.2010**
(21) Application number: 07425661.1
(22) Date of filing: 19.10.2007
(51) Int. Cl.: G08G 1/0968, G01C 21/26, G08G 1/01, G08G 1/123

(54) **Vehicle dynamic navigation system**
System zur dynamischen Navigation für ein Fahrzeug
Système de navigation dynamique pour véhicule

(43) Date of publication of application: 22.04.2009
(73) Proprietor: C.R.F. Società Consortile per Azioni, 10043 Orbassano (Torino) (IT)
(72) Inventor: Navone, Piergiorgio, 10043 Orbassano (IT); Gambera, Mario, 10043 Orbassano (IT)
(74) Representative: Bergadano, Mirko

(56) References cited:
- EP-A- 0 845 658
- EP-A- 1 186 865
- WO-A-01/88480
- JP-A- 7 190 794

## Description

The present invention relates to a vehicles dynamic navigation system.

As is known, the main function of vehicle navigation systems is to provide the driver of the vehicle with a sequence of graphical and/or vocal information regarding a route to follow to reach a desired and selectable destination in an optimal manner.

These systems are essentially composed of a receiver unit for radio signals originating from satellites forming part of a satellite positioning system, such as the GPS system for example, or from broadcast devices located in the area around the vehicle, a processing unit, which calculates the position of the vehicle based on the signal received from the satellite system, and a user interface that has the main task of providing the driver of the vehicle with graphical and/or vocal route information. The user interface is used in the navigation system for entering the necessary data for calculating the route.

Among the known navigation systems offered by the major vehicle manufacturers, there are navigation systems of the onboard type, in which calculation of the route requested by the user is carried out directly onboard the vehicle by a specially provided processing unit, and navigation systems of the off-board type, in which calculation of the route requested by the user is carried out externally to the vehicle.

In particular, in the off-board navigation systems see for example WO 01/88480 A, calculation of the route between the current position of the vehicle and the destination that the user wishes to reach is carried out by an operations centre in communication with the vehicle and transmitted by the centre to the navigation system integrated on board the vehicle, which receives the calculated data from the operations centre and provides the driver with the graphical and/or vocal instructions on the route to follow.

The main advantage of off-board navigation systems is that of achieving a fundamental simplification of the navigation system integrated on board the vehicle, as the processing unit of the onboard navigation system limits itself to calculating the position of the vehicle, but does not implement the algorithms necessary to calculate routes, nor does it need all of the data storage units necessary for storing cartographic maps.

Another advantage of off-board navigation systems consists in that the updating of information of a geographic nature used for calculating the routes requested by the user is carried out with an opportune frequency directly by the operations centre, relieving the user of this task. This guarantees the supply of an ever-efficient service, the reliability of which is not affected by possible errors due to geographic information that has not been updated by the user.

At present, vehicle navigation systems constitute a commercial product in strong expansion, due both to the need of car manufacturers to differentiate themselves in vehicle ranges equipped with technological systems increasingly on the cutting-edge, and because of the new road mobility needs of motorists who drive in increasingly complex scenarios and need and an ever-increasing amount of varied information. This has caused the development of dynamic" navigation systems, of both off-board and onboard types, which do not limit themselves to providing the driver of the vehicle with a series of instructions on how to reach a predetermined destination, but which are also capable of providing the user with additional information, such as traffic information for example. Dynamic navigation systems are also able to monitor the route driven along by the user in relation to the road conditions and to provide the user with an alternative route in cases where events arise that compromise the road conditions of the route being taken, such as accidents or heavy traffic for example.

However, both the off-board and onboard types of dynamic navigation systems have drawback.

For example, off-board dynamic navigation systems oblige the user to delay commencing navigation and to wait until information regarding the requested route is received from the operations centre.

Instead, the main drawback of onboard dynamic navigation systems is mainly caused by the large amount of data concerning the road conditions of the road network, which must be periodically provided to the onboard system and which the latter must process. In fact, first of all, the transmission of such a large amount of data requires the constant availability of rather high bandwidth, while its processing by the onboard system requires the use of high-performance processing and data storage units, which are generally rather expensive and thus condition the overall cost of the vehicle.

EP-A-1 186 865 discloses a motor vehicle navigation system that receives route information from a central unit, wherein a vehicle route between an instantaneous location and a destination is calculated, such that data about the instantaneous location and the destination are determined in the vehicle as data about the current route, traffic information data are delivered from a central traffic information data memory to a traffic network, the delivered traffic information data are used to calculate the route in the traffic network between the instantaneous location and the destination location, the data of the calculated route and the data about the current route are made available to the driver, characterized in that the data about the current route are transmitted from the vehicle to the central traffic information data memory, and, as the response to the transmission of data, traffic information data are delivered about the current route.

EP-A-O 845 658 discloses a dynamic route guidance apparatus, wherein a vehicle transmits destination to a control center, and the control center obtains an optimum route in consideration of current traffic conditions and notifies the vehicle of the route. In order to avoid detouring, the vehicle itself searches a route to the destination, and transmits destination data on a link to the control center. The link is located nearest to the destination among all UTMS links on the searched route, the UTMS links being controlled by the control center. Receiving the data, the control center calculates a recommended route which includes the notified link as a tailing link, and informs the vehicle of the route. The vehicle combines the searched route and the informed route into a final guiding route.

JP 07 190794 A discloses an on-vehicle route acquisition device adapted to provide route information optimum for a vehicle travel condition by evaluating a route obtained through an on-vehicle communication means and making judgement about the appropriateness of the route. In particular, destination data and a calculation request signal are inputted at a process and when a vehicle enters the service area of a beacon on a road during a travel, a destination and the like transmission section sends destination coordinates to the beacon via a process. Also, the beacon sends back a link train or the like leading to a terminal link. A controller, then, makes judgement about whether route information from the beacon or route calculated on a vehicle should be adopted. In other words, a rectilinear distance between a receiving position and a destination is calculated, and when the distance is shorter than the prescribed distance, a receiving route is judged not to be appropriate. When a previously obtained optimum route exists, judgement is made as to whether the vehicle is travelling along the route. When the vehicle travels along other routes, a route between a current position and the destination is calculated for use as an optimum route. Furthermore, when the distance is longer and the previously obtained optimum route includes a certain ratio or more of the receiving route, this route is used as an optimum route. If not included, guidance is continued following the previously obtained optimum route.

The objective of the present invention is to provide a dynamic navigation system that overcomes at least part of the drawbacks of known dynamic navigation systems.

According to the present invention, a dynamic navigation system is provided, as defined in the enclosed claims.

For a better understanding of the present invention, a preferred embodiment shall now be described, purely by way of a non-limitative example, with reference to the enclosed drawings, where:
- Figure 1 shows a dynamic navigation system forming the subject of the present invention, and
- Figure 2 shows a flowchart of the method of navigation implemented by the dynamic navigation system of the present invention.

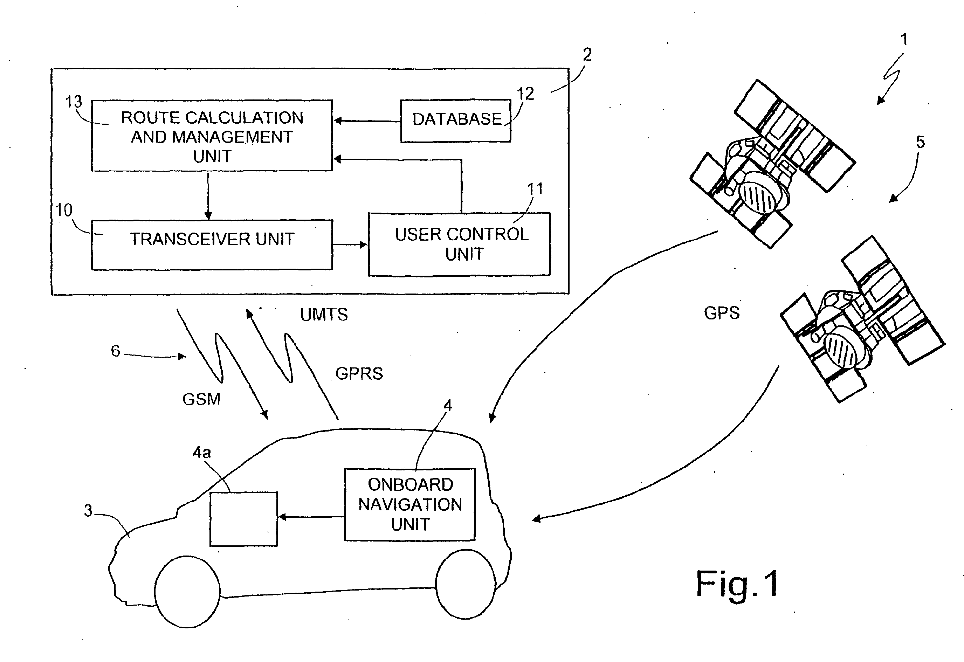

As shown in Figure 1, the navigation system 1 forming the subject of the present invention comprises at least one operations centre 2, an onboard navigation unit 4 installed on board a vehicle 3, a satellite positioning system of known type 5, such as GPS for example, cooperating with the onboard navigation unit 4 and a mobile two-way communications network of known type 6, for example GSM, GPRS or UMTS, inserted between the operations centre 2 and the vehicle 3.

The vehicle 3 in Figure 1 is also equipped with sensors of known type (not shown in the figure) connected to the onboard navigation unit 4 and providing output signals indicating the speed and direction of travel of the vehicle 3, for example, an odometer and a gyroscope. Optionally, the vehicle 3 in Figure 1 could also be equipped with a computerized system of known type (not shown in the figure) for detecting vehicle traffic, of the Floating Car Data type for example, henceforth indicated by the initials FCD.

The FCD computerized system is able to recognise, in a completely automatic manner, the state of road traffic congestion due to the circulation of road vehicles, motor vehicles in particular, and allows transmission of the vehicle's position to a remote station.

In particular, always with reference to Figure 1, the onboard navigation unit 4 is equipped with:
- a data storage unit (not shown in Figure 1) on which cartographic information regarding a plurality of routes present within the territory is stored,
- means (not shown in the figure) for receiving radio signals transmitted by the GPS satellite positioning system 5 and signals originating from the odometer and the gyroscope,
- means (not shown in the figure) for transmission and reception of radio signals that allow two-way data exchange with the operations centre 2 via the mobile communications network 6, and
- a processing unit (not shown in Figure 1) configured to calculate the current position of the vehicle and to implement the necessary algorithms for calculating the routes requested by the user.

In particular, the processing unit is configured to determine the current position of the vehicle based on signals coming from the GPS satellite positioning system 5 and to calculate the position of the vehicle, even in cases where the vehicle is in areas not reached by the signals coming from the GPS satellite system. To this end, the onboard navigation unit 4 is configured to implement a known algorithm of the DEAD RECKONING type, which calculates the position of the vehicle 3 on the basis of the speed and direction of travel of the vehicle 3, supplied to the onboard navigation unit 4 by the signals coming from the odometer and the gyroscope, and the last position calculated on the basis of the signals coming from the GPS satellite system.

In particular, the onboard navigation unit 4 comprises at least one user interface 4a (shown schematically), which can be equipped with its own display or use the display of the instrument panel and which allows the user to carry out all of the operations necessary for using the dynamic navigation system 1.

For example, the user can enter the data of a target destination or enter commands (full details given further on) for communication with the operations centre 2. This data and these commands are given according to the normal methods provided in this sector, for example, by using a graphical interface and pull-down menus displayed on the display unit 4b.

Always with reference to Figure 1, the operations centre 2 comprises:
- means of transmission and reception 10 for two-way data transmission between the operations centre 2 and the onboard navigation unit 4,
- a user control unit 11 in which at least one database is stored containing identity information and the type of service subscribed to by the users of the navigation system 1 and configured to manage the user information,
- a database 12 containing information regarding the traffic conditions and road conditions of the road network in a portion of territory, for example, in relation to freedom of access to road routes, weather conditions, roadworks, etc., and
- a route processing and management unit 13 in which at least one database is stored containing information of a cartographic nature regarding a plurality of roads present within the territory, and which has the task of calculating dynamic road routes based on information coming from the navigation unit 4 of the vehicle 3 and information regarding traffic conditions and road conditions coming from the monitoring system 12.

In particular, the operations centre is configured to receive information regarding traffic conditions and road conditions of the road network from a remote monitoring station (not shown in the figure) and to update the database 12 on the basis of this information.

In particular, the user control unit 11 cooperates with the means of transmission and reception 10 and with the route processing and management unit 13, and is configured to receive information via the means of transmission and reception 10 regarding the identification of the onboard navigation unit 4, on the basis of which the user control unit 11 identifies the vehicle 3 and the type of service subscribed to by the user driving the vehicle 3.

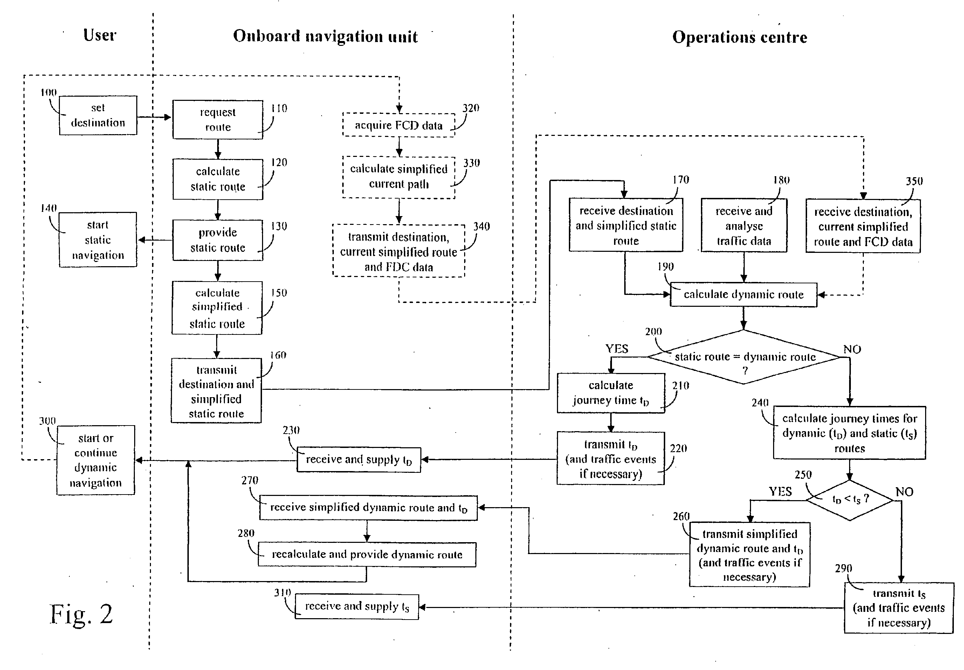

Figure 2 shows a flowchart of the phases of the navigation method implemented by the dynamic navigation system of the present invention.

In particular, as shown in Figure 2, when a user needs information regarding a new route, he/she sets the target destination via the user interface 4a and the request is sent to the onboard navigation unit 4 (block 100) that, upon receiving the aforementioned request (block 110), calculates a static route, or rather one based just on information of a geographic nature and possible weights that take into account the driving characteristics of stretches of roads, but without taking into account the effects of traffic that influence the road conditions of the route (block 120), which allows the user to reach the set target destination. In particular, the static route is calculated on the basis of the current position of the vehicle, the destination set by the user and information of a cartographic nature stored in the onboard navigation unit 4.

Consequently, the onboard navigation unit 4 providers the user with the calculated static route (block 130) via the user interface 4a, who can then commence static navigation (block 140) on the basis of the supplied information.

After having calculated the static route, in block 150, the onboard navigation unit 4 calculates a simplified version of the static route provided to the to the user, for example, by means of the Douglas-Peucker algorithm with which a simplification of a polyline can be determined, or through determining a plurality of identifiers for crossroads and/or more important stretches of the route, or simply by determining a plurality of points distributed along the route.

Then, in block 160, through the specially provided means of radio signal transmission and reception, the onboard navigation unit 4 transmits the following to the operations centre 2: identity information and the type of service subscribed to by the user of the vehicle 3, information regarding the destination set by the user and that regarding the simplified route.

When the operations centre 2 receives the data sent by the user (block 170) via the transceiver unit 10, first of all it checks, via the user control unit 11, if the user is enabled to receive the services offered by the operations centre 2.

If so, the route processing and management unit 13 of the operations centre 2 calculates the best possible dynamic route (block 190), that is on the basis of information regarding the traffic conditions and the road conditions of the individual stretches of the road network provided in block 180 by the monitoring system 12, which monitors and analyzes traffic flow in order to determine events that affect the state of driving conditions of each stretch of road.

After having calculated the dynamic route, in block 200 the route processing and management unit 13 compares the simplified static route sent by the onboard navigation unit 4 with the calculated dynamic route and, in cases where the static route is substantially equal to the dynamic route, the YES exit in block 200 is taken and, in block 210, the route processing and management unit 13 calculates a journey time *t_{D}* for the dynamic route. The journey time *t_{D}* of the dynamic route is then transmitted (block 220) from the operations centre 2, through the transceiver unit 10, to the onboard navigation unit 4 that, after receiving it, provides it to the user via the interface 4a, (block 230).

In addition to the journey time *t_{D}* of the dynamic route, the operations centre 2 could also be configured to transmit information to the onboard navigation unit 4 regarding events that could influence the road conditions of the calculated dynamic route, this information arriving from the remote monitoring station and then stored in the database 12.

In the case where the dynamic route is significantly different from the static route, the NO exit in block 200 is taken, the route processing and management unit 13 calculates the journey time *t_{D}* for the calculated dynamic route (block 240) and a journey time *t_{S}* for the simplified static route sent by the onboard navigation unit 4 and, in block 250, compares journey time *t_{D}* with journey time *t_{S}*.

In the case where the journey time *t_{D}* of the dynamic route is less than or equal to the journey time of the static route *t_{S}*, the YES exit in block 250 is taken and the operations centre 2 transmits a simplified version of the calculated dynamic route and the associated journey time *t_{D}* to the onboard navigation unit 4. In this case as well, the operations centre 2 could also be configured to transmit information to the onboard navigation unit 4 regarding events that could influence the road conditions of the calculated dynamic route, this information arriving from the remote monitoring station and then stored in the database 12, block 260.

The information regarding the simplified dynamic route and the associated journey time *t_{D}* and, if present, that regarding the aforementioned events, is then received by the onboard navigation unit 4, block 270.

The onboard navigation unit 4 then calculates a new route based on the simplified dynamic route received, which is as similar as possible to the simplified dynamic route received, and provides the calculated route to the user, block 280.

In the case where the journey time *t_{D}* of the dynamic route is greater than the journey time of the static route *t_{S}*, the NO exit in block 250 is taken and the operations centre 2 transmits just the journey time *t_{S}* of the static route and, if present, information regarding any detected events that might influence the road conditions of the calculated dynamic route, to the onboard navigation unit 4, block 290.

The information regarding the journey time *t_{S}* of the route, and possibly that regarding the aforementioned events, is then received by the onboard navigation unit 4 and provided to the user by the latter, block 310.

The above-described route determination and dynamising procedure allows the user to continue navigation in a "dynamic" manner, that is by taking into account the traffic conditions and road conditions of the route, independently of whether or not the operations centre determines an alternative route to that calculated by the onboard navigation unit 4, and the result of the comparison between the associated journey times *t_{D}* and *t_{S}*.

Optionally, once the above-described route determination and dynamising procedure has terminated, the dynamic navigation system 1 could be configured to implement a procedure for monitoring and, if necessary, updating the route followed by the vehicle 3.

This route monitoring and updating procedure is shown in Figure 2 by means of the blocks depicted with a dashed line.

In particular, to that end, the vehicle acquires data regarding vehicle traffic (block 320), which is continuously detected by the FCD computerized system from the moment in which navigation is commenced, and the current position of the vehicle, calculates a simplified version of the currently followed route (block 330) as described in reference to block 150, and transmits the current position of the vehicle, the destination set by the user, the data regarding vehicle traffic and the simplified version of the currently followed route (block 340) to the operations centre 2 via the specially provided means of radio signal transmission and reception.

The aforementioned information is received by the operations centre 2 via the transceiver unit 10 (block 350) and, based on the aforementioned information, the operations centre 2 repeats the procedure described in blocks 190 to 310.

The above-described monitoring and updating procedure for the route followed by the vehicle 3 is implemented by the dynamic navigation system 1 in a continuous manner throughout navigation. In this way, it is possible to provide the user with a continuously up-to-date route, in function of the actual traffic conditions and road conditions or, if necessary, an alternative route to the route currently being followed in order to allow the user to dynamically navigate to the target destination.

The advantages of the above-described system and method of dynamic onboard navigation are evident.

The implementation of the route determination and dynamising procedure shown in Figure 2 allows the user to commence navigating almost immediately, without having to wait to receive information from the operations centre. In fact, the calculation of the static route carried out via the onboard navigation unit 4 allows the user to be provided with information on the route to follow in a short space of time, which depends exclusively on the processing speed of the onboard navigation unit 4, but does not need external information.

Furthermore, carrying out the dynamic route calculations in the operations centre both during the route determination procedure and during the monitoring and updating procedure allows the amount of data exchanged between the operations centre 2 and the onboard navigation unit 4, and vice versa, to be significantly reduced and, in consequence, to limit the bandwidth of the channels of the communications network 6 necessary for data transmission. This allows the onboard navigation unit 4 to be made with not particularly high performance means of transmission and reception, processing and data storage, and so considerably reduces the manufacturing costs of the onboard navigation unit.

Finally, it is obvious that modifications and variants can be made to the system and method described and illustrated herein without leaving the scope of the protection of the present invention, as defined in the enclosed claims.

Alternatively, for example, the onboard navigation unit 4 could be configured to transmit the entire static route it has calculated to the operations centre and not a simplified version of it as previously described.

## Claims

1. A vehicle navigation system, comprising an operating centre (2) configured to monitor traffic and road conditions of at least one road network, and an in-vehicle navigation unit (4) configured to communicate with the operating centre (2);
wherein the in-vehicle navigation unit (4) is configured to:
• acquire a current vehicle location and an inputted destination location;
• compute a static road route from the current vehicle location to the destination location based on stored geographic data; and
• provide navigation information based on the static road route;
**characterized in that** the in-vehicle navigation unit (4) is further configured to:
• transmit to the operating centre information related to the destination location and the static road route;
and the operating centre is further configured to:
• compute a dynamic road route based on the destination location and the static road route received from the in-vehicle navigation unit (4), and on traffic and/or road conditions of the road network and/or of the static road route;
• compare the dynamic road route with the static road route; and
• transmit to the in-vehicle navigation unit (4) information related to one of the dynamic and static road routes based on the outcome of the comparison.

2. The navigation system according to claim 1, wherein the operating centre is further configured to:
• compute a dynamic journey time (*t_{D}*) for the dynamic road route and a static journey time (*t_{S}*) for the static road route;
• compare the dynamic road route with the static road route, and the dynamic journey time (*t_{D}*) with the static journey time (*tₛ*); and
• transmit to the in-vehicle navigation unit (4) the dynamic road route and/or the dynamic journey time (*t_{D}*) or the static journey time (*t_{S}*) based on the outcome of the comparison.

3. The navigation system according to claim 2, wherein the operating centre is further configured to:
• compute the dynamic journey time (*t_{D}*) and the static journey time (*t_{S}*) when the dynamic road route is different from the static road route; and
• transmit to the in-vehicle navigation unit (4) the dynamic road route and the dynamic journey time (*t_{D}*) when the dynamic journey time (*t_{D}*) is lower than the static journey time (*t_{S}*).

4. The navigation system according to claim 3, wherein the operating centre is further configured to:
• transmit to the in-vehicle navigation unit (4) the static journey time (*t_{S}*) when the dynamic journey time (*t_{D}*) is higher than the static journey time (*t_{S}*).

5. The navigation system according to any one of the preceding claims, wherein the operating centre is further configured to:
• compute and transmit to the in-vehicle navigation unit (4) the dynamic journey time (*t_{D}*) when the dynamic road route is substantially equal to the static road route.

6. The navigation system according to any one of the preceding claims, wherein the in-vehicle navigation unit (4) is further configured to:
• re-compute the static road route based on the received dynamic road route; and
• provide navigation information based on the re-computed static road route, and/or the received dynamic journey time (*t_{D}*) or the received static journey time (*t_{S}*).

7. The navigation system according to any one of the preceding claims, wherein the in-vehicle navigation unit (4) is further configured to:
• acquire information about around-vehicle road traffic; and
• transmit to the operating centre (2) the current vehicle location, the destination location, the information about around-vehicle road traffic, and the updated static road route;
and wherein the operating centre (2) is further configured to:
• re-compute the dynamic road route based on the current vehicle location, the destination location, the updated static road route, the around-vehicle road traffic, and the traffic and road conditions of the road network and/or of the updated static road route.

8. The navigation system according to any one of the preceding claims, wherein the in-vehicle navigation unit (4) is further configured to:
• compute a simplified static road route; and
• transmit the simplified static road route to the operating centre (2);
and wherein the operating centre (2) is further configured to compute the dynamic road route based on the received simplified static route.

9. The navigation system according to any one of the preceding claims, wherein the operating centre (2) is further configured to transmit to the in-vehicle navigation unit (4) information on traffic and/or road conditions of the road network, and/or of the static road route, and/or of the dynamic road route.

10. A vehicle (3) comprising an in-vehicle navigation unit (4) according to any one of the preceding claims.

## Patentansprüche

1. Ein Fahrzeugnavigationssystem, aufweisend ein Betriebszentrum (2), das zum Überwachen der Verkehrs- und der Straßensituation mindestens eines Straßennetzes eingerichtet ist, und eine fahrzeuginterne Navigationseinheit (4), die zum Kommunizieren mit dem Betriebszentrum (2) eingerichtet ist,
wobei die fahrzeuginterne Navigationseinheit (4) eingerichtet ist zum:
- Erfassen einer aktuellen Fahrzeugposition und einer eingegebenen Zielposition,
- Berechnen einer statischen Straßenstrecke von der aktuellen Fahrzeugposition zu der Zielposition auf der Grundlage von gespeicherten geographischen Daten, und zum
- Bereitstellen von Navigationsinformationen auf der Grundlage der statischen Straßenstrecke,
**dadurch gekennzeichnet, dass** die fahrzeuginterne Navigationseinheit (4) ferner eingerichtet ist zum:
- Übermitteln von Informationen bezüglich der Zielposition und der statischen Straßenstrecke an das Betriebszentrum,
und wobei das Betriebszentrum ferner eingerichtet ist zum:
- Berechnen einer dynamischen Straßenstrecke auf der Grundlage der von der fahrzeuginternen Navigationseinheit (4) erhaltenen Zielposition und statischen Straßenstrecke, und der Verkehrs- und/oder der Straßensituation des Straßennetzes und/oder der statischen Straßenstrecke,
- Vergleichen der dynamischen Straßenstrecke mit der statischen Straßenstrecke, und
- Übermitteln von Informationen bezüglich einer von der dynamischen und der statischen Straßenstrecke auf der Grundlage des Ergebnisses des Vergleichs an die fahrzeuginterne Navigationseinheit (4).

2. Das Navigationssystem gemäß Anspruch 1, wobei das Betriebszentrum ferner eingerichtet ist zum:
- Berechnen einer dynamischen Fahrtzeit (t_{D}) für die dynamische Straßenstrecke und einer statischen Fahrtzeit (t_{S}) für die statische Straßenstrecke,
- Vergleichen der dynamischen Straßenstrecke mit der statischen Straßenstrecke und der dynamischen Fahrtzeit (t_{D}) mit der statischen Fahrtzeit (t_{S}), und zum
- Übermitteln der dynamischen Straßenstrecke und/oder der dynamischen Fahrtzeit (t_{D}) oder der statischen Fahrtzeit (t_{S}) auf der Grundlage des Vergleichs an die fahrzeuginterne Navigationseinheit (4).

3. Das Navigationssystem gemäß Anspruch 2, wobei das Betriebszentrum ferner eingerichtet ist zum:
- Berechnen der dynamischen Fahrzeit (t_{D}) und der statischen Fahrtzeit (t_{S}), wenn sich die dynamische Straßenstrecke von der statischen Straßenstrecke unterscheidet, und zum
- Übermitteln der dynamischen Straßenstrecke und der dynamischen Fahrtzeit (t_{D}) an die fahrzeuginterne Navigationseinheit (4), wenn die dynamische Fahrtzeit (t_{D}) kürzer als die statische Fahrtzeit (t_{S}) ist.

4. Das Navigationssystem gemäß Anspruch 3, wobei das Betriebszentrum ferner eingerichtet ist zum:
- Übermitteln der statischen Fahrtzeit (t_{S}) an die fahrzeuginterne Navigationseinheit, wenn die dynamische Fahrtzeit (t_{D}) länger als die statische Fahrtzeit (t_{S}) ist.

5. Das Navigationssystem gemäß einem der vorhergehenden Ansprüche, wobei das Betriebszentrum ferner eingerichtet ist zum:
- Berechnen und Übermitteln der dynamischen Fahrtzeit (t_{D}) an die fahrzeuginterne Navigationseinheit (4), wenn die dynamische Straßenstrecke im Wesentlichen gleich der statischen Straßenstrecke ist.

6. Das Navigationssystem gemäß einem der vorhergehenden Ansprüche, wobei die fahrzeuginterne Navigationseinheit (4) ferner eingerichtet ist zum:
- erneuten Berechnen der statischen Straßenstrecke auf der Grundlage der empfangenen dynamischen Straßenstrecke, und zum
- Bereitstellen von Navigationsinformationen auf der Grundlage der neu berechneten statischen Straßenstrecke und/oder der empfangenen dynamischen Fahrtzeit (t_{D}) oder der empfangenen statischen Fahrtzeit (t_{S}).

7. Das Navigationssystem gemäß einem der vorhergehenden Ansprüche, wobei die fahrzeuginterne Navigationseinheit (4) ferner eingerichtet ist zum:
- Erfassen von Informationen über den Straßenverkehr um das Fahrzeug, und zum
- Übermitteln der aktuellen Fahrzeugposition, der Zielposition, der Informationen über den Straßenverkehr um das Fahrzeug und der aktualisierten statischen Straßenstrecke an das Betriebszentrum (2),
und wobei das Betriebszentrum (2) ferner eingerichtet ist zum:
- erneuten Berechnen der dynamischen Straßenstrecke auf der Grundlage der aktuellen Fahrzeugposition, der Zielposition, der aktualisierten statischen Straßenstrecke, des Straßenverkehrs um das Fahrzeug und der Verkehrs- und der Straßensituation des Straßennetzes und/oder der aktualisierten statischen Straßenstrecke.

8. Das Navigationssystem gemäß einem der vorhergehenden Ansprüche, wobei die fahrzeuginterne Navigationseinheit (4) ferner eingerichtet ist zum:
- Berechnen einer vereinfachten statischen Straßenstrecke und zum
- Übermitteln der vereinfachten statischen Straßenstrecke an das Betriebszentrum (2),
und wobei das Betriebszentrum (2) ferner zum Berechnen der dynamischen Straßenstrecke auf der Grundlage der empfangenen vereinfachten statischen Strecke eingerichtet ist.

9. Das Navigationssystem gemäß einem der vorhergehenden Ansprüche, wobei das Betriebszentrum (2) ferner zum Übermitteln von Informationen über die Verkehrs- und/oder die Straßensituation des Straßennetzes und/oder der statischen Straßenstrecke und/oder der dynamischen Straßenstrecke an die fahrzeuginterne Navigationseinheit (4) eingerichtet ist.

10. Ein Fahrzeug (3), welches eine fahrzeuginterne Navigationseinheit (4) gemäß einem der vorhergehenden Ansprüche aufweist.

## Revendications

1. Système de navigation pour véhicule, comprenant un centre d'exploitation (2) configuré pour surveiller les conditions de circulation et l'état des routes d'un moins un réseau routier, et une unité de navigation embarquée (4) configurée pour communiquer avec le centre d'exploitation (2);
l'unité de navigation embarquée (4) étant configurée pour
- acquérir une localisation en cours du véhicule et une localisation de destination saisie;
- calculer un itinéraire statique entre la localisation en cours du véhicule et la localisation de destination à partir de données géographiques stockées; et
- délivrer des informations de navigation à partir de l'itinéraire statique;
**caractérisé en ce que** l'unité de navigation embarquée (4) est, en outre, configurée pour :
- transmettre au centre d'exploitation des informations concernant la localisation de destination et l'itinéraire statique;
et le centre d'exploitation est, en outre, configuré pour
- calculer un itinéraire dynamique à partir de la localisation de destination et de l'itinéraire statique reçus de l'unité de navigation embarquée (4), et des conditions de circulation et/ou de l'état des routes du réseau routier et/ou de l'itinéraire statique;
- comparer l'itinéraire dynamique à l'itinéraire statique; et
- transmettre à l'unité de navigation embarquée (4) des informations concernant l'un des itinéraires dynamique et statique en fonction du résultat de la comparaison.

2. Système de navigation selon la revendication 1, dans lequel le centre d'exploitation est, en outre, configuré pour :
- calculer un temps de trajet dynamique (*t_{D}*) pour l'itinéraire dynamique et un temps de trajet statique (*t_{S}*) pour l'itinéraire statique;
- comparer l'itinéraire dynamique à l'itinéraire statique, et le temps de trajet dynamique (*t_{D}*) au temps de trajet statique (*t_{S}*); et
- transmettre à l'unité de navigation embarquée (4) l'itinéraire dynamique et/ou le temps de trajet dynamique (*t_{D}*) ou le temps de trajet statique (*t_{S}*) en fonction du résultat de la comparaison.

3. Système de navigation selon la revendication 2, dans lequel le centre d'exploitation est, en outre, configuré pour :
- calculer le temps de trajet dynamique (*t_{D}*) et le temps de trajet statique (*t_{S}*) lorsque l'itinéraire dynamique est différent de l'itinéraire statique; et
- transmettre à l'unité de navigation embarquée (4) l'itinéraire dynamique et le temps de trajet dynamique (*t_{D}*) lorsque le temps de trajet dynamique (*t_{D}*) est inférieur au temps de trajet statique *(t_{S}).*

4. Système de navigation selon la revendication 3, dans lequel le centre d'exploitation est, en outre, configuré pour :
- transmettre à l'unité de navigation embarquée (4) le temps de trajet statique (*t_{S}*) lorsque le temps de trajet dynamique (*t_{D}*) est supérieur au temps de trajet statique (*t_{S}*).

5. Système de navigation selon l'une quelconque des revendications précédentes, dans lequel le centre d'exploitation est, en outre, configuré pour :
- calculer et transmettre à l'unité de navigation embarquée (4) le temps de trajet dynamique (*t_{D}*) lorsque l'itinéraire dynamique est sensiblement identique à l'itinéraire statique.

6. Système de navigation selon l'une quelconque des revendications précédentes, dans lequel l'unité de navigation embarquée (4) est, en outre, configurée pour :
- recalculer l'itinéraire statique à partir de l'itinéraire dynamique reçu; et
- délivrer des informations de navigation à partir de l'itinéraire statique recalculé, et/ou du temps de trajet dynamique (*t_{D}*) reçu ou du temps de trajet statique (*t_{S}*) reçu.

7. Système de navigation selon l'une quelconque des revendications précédentes, dans lequel l'unité de navigation embarquée (4) est, en outre, configurée pour :
- acquérir des informations concernant la circulation routière aux abords du véhicule; et
- transmettre au centre d'exploitation (2) la localisation en cours du véhicule, la localisation de destination, les informations concernant la circulation routière aux abords du véhicule, et l'itinéraire statique mis à jour;
et dans lequel le centre d'exploitation (2) est, en outre, configuré pour :
- recalculer l'itinéraire dynamique à partir de la localisation en cours du véhicule, de la localisation de destination, de l'itinéraire statique mis à jour, de la circulation routière aux abords du véhicule, et des conditions de circulation et de l'état des routes du réseau routier et/ou de l'itinéraire statique mis à jour.

8. Système de navigation selon l'une quelconque des revendications précédentes, dans lequel l'unité de navigation embarquée (4) est, en outre, configurée pour :
- calculer un itinéraire statique simplifié; et
- transmettre l'itinéraire statique simplifié au centre d'exploitation (2);
et dans lequel le centre d'exploitation (2) est, en outre, configuré pour calculer l'itinéraire dynamique à partir de l'itinéraire statique simplifié reçu.

9. Système de navigation selon l'une quelconque des revendications précédentes, dans lequel le centre d'exploitation (2) est, en outre, configuré pour transmettre à l'unité de navigation embarquée (4) des informations concernant les conditions de circulation et/ou l'état des routes du réseau routier, et/ou l'itinéraire statique et/ou l'itinéraire dynamique.

10. Véhicule (3) comprenant une unité de navigation embarquée (4) selon l'une quelconque des revendications précédentes.
